Europäisches Patentamt

European Patent Office

Office européen des brevets

(19)

(11) Veröffentlichungsnummer: **0 024 418**
**B1**

(12)

# EUROPÄISCHE PATENTSCHRIFT

(45) Veröffentlichungstag der Patentschrift:
29.06.83

(51) Int. Cl.³: **G 01 N 1/02,** B 07 C 5/36

(21) Anmeldenummer: **80900489.8**

(22) Anmeldetag: **22.02.80**

(86) Internationale Anmeldenummer:
**PCT/EP 80/00010**

(87) Internationale Veröffentlichungsnummer:
**WO 80/01837 (04.09.80 Gazette 80/20)**

(54) **VERFAHREN ZUM SORTIEREN GROBER BIS FEINTEILIGER MATERIALIEN NACH IHRER CHEMISCHEN ZUSAMMENSETZUNG.**

(30) Priorität: **26.02.79 DE 2907513**

(43) Veröffentlichungstag der Anmeldung:
**11.03.81 Patentblatt 81/10**

(45) Bekanntmachung des Hinweises auf die Patenterteilung:
**29.06.83 Patentblatt 83/26**

(84) Benannte Vertragsstaaten:
**AT CH DE FR GB LU NL SE**

(56) Entgegenhaltungen:
**DE-A-2 042 227**
**FR-A-1 554 504**
**FR-A-2 271 880**

(73) Patentinhaber: **LUOSSAVAARA-KIIRUNAVAARA AB,
Sturegatan 11, S-100 41 Stockholm (SE)**

(72) Erfinder: **KÖNIG, Rainer, Dörnweg 13, D-6236 Eschborn
(DE)**
Erfinder: **FREUND, Hans-Ulrich,
Albert-Schweitzer-Strasse 7, D-6382 Friedrichsdorf (DE)**
Erfinder: **HEIDE, Helga, Am Hohenstein 14,
D-6233 Kelkheim (DE)**
Erfinder: **SIEGLEN, Rolf Albert, Im Hohlweg 8a,
D-6231 Sulzbach (DE)**

(74) Vertreter: **Rupprecht, Klaus, Dipl.-Ing., Am Römerhof 35,
D-6000 Frankfurt (Main) 90 (DE)**

EP 0 024 418 B1

ACTORUM AG

Verfahren zum Sortieren von groben bis feinteiligen Materialien nach ihrer chemischen Zusammensetzung

Die Erfindung bezieht sich auf ein Verfahren zum Sortieren von groben bis feinteiligen Materialien nach ihrer chemischen Zusammensetzung, bei dem Proben entnommen und analysiert werden und bei dem das Sortieren der Materialien in Abhängigkeit von dem Analysenergebnis gesteuert wird. Das neue Verfahren lässt sich beim Abbau oder bei der Verarbeitung von Mineralien, wie Erz, Kohle, Basalt, Sand usw., oder von Halbfertigprodukten, wie Mineralien in Form von Pellets, Koks und vielen anderen Materialien einsetzen.

Beim Abbau mineralischer Rohstoffe ist es im Hinblick auf den wirtschaftlichen Aufwand notwendig, eine ständige Kontrolle der Rohstoffzusammensetzung durchzuführen. Zum einen wird dabei der Anteil von Taubgestein bzw. Nutzgestein bestimmt, zum anderen ist es oft erforderlich, bestimmte störende Beimengungen unter Kontrolle zu halten. Voraussetzung für diese Messungen ist die Gewinnung einer Analysenprobe, die möglichst repräsentativ für die betrachtete Rohstoffmenge sein muss. Üblicherweise werden dabei stichprobenartig Mengen des Rohstoffes mit Hilfe einer Schaufel oder mit anderen Greifwerkzeugen entnommen. Die Probenmenge wird dann für die eigentliche chemische Analyse aufbereitet (gemahlen, homogenisiert). Zwei wesentliche Probleme treten dabei auf, nämlich

– die Gewinnung einer tatsächlich repräsentativen Probe und

– die Durchführung einer Analyse in so kurzer Zeit, dass in Abhängigkeit von dem Analysenergebnis in den Weitertransport oder in die Weiterverarbeitung der Materialien eingegriffen werden kann.

Da die gesamte Analyse (Probenahme, Aufbereitung, chemische Analyse) relativ lang dauert (mindestens 10 Minuten) ist es bisher nur möglich, in viel zu grossen Zeitabständen Proben zu entnehmen und in Abhängigkeit von den Analysenergebnissen in den Prozess einzugreifen. So hat dies z.B. beim Abbau von Eisenerz in einer grossen Untertagemine eine ungewollte Aufmischung von Erzen verschieden hoher Phosphorgehalte zur Folge. Diese Aufmischung führt dazu, dass die Ausbeute an phosphorarmen Erz erheblich unter der vom geologischen Standpunkt aus möglichen liegt. Die Aufmischung geschieht bereits beim Abbau vor Ort. Das abgesprengte Erz wird mit Hilfe von Schaufelladern (der Inhalt einer Schaufel beträgt ungefähr 8 Tonnen) zu ca. 40 bis 200 m entfernten Schächten transportiert. Nur von etwa jeder 10. Schaufel wird mit Hilfe eines Greifwerkzeuges eine ca. 1 Kilogramm schwere Probe entnommen. Diese Probe wird gemahlen, gesiebt, magnetisch separiert und davon eine Teilmenge getrocknet, davon wiederum eine Teilmenge abgemessen und diese nasschemisch analysiert. Aufgrund dieses Analysenergebnisses werden bis zum Vorliegen des nächsten Analysenergebnisses alle weiteren Schaufeln in denjenigen Schacht gekippt, der für die analysierte Qualitätsstufe vorgesehen ist, obwohl sich in der Regel die Zusammensetzung des Materials von Schaufel zu Schaufel ändert. Im Phosphorgehalt, der die Qualität wesentlich bestimmt, können Schwankungen um den Faktor 10 bis 100 auftreten.

Aus der DE-A-2 042 227 ist eine Einrichtung für automatische Proportionierung von Rohstoffkomponenten für die Verarbeitung von Mineralmischungen für industrielle Verfahrensprozesse und insbesondere für die Zementproduktion bekannt. Hierbei werden in der Abgasrohrleitung einer Luftstromwalzenmühle Staubproben entnommen und analysiert. Die Analyse bzw. Messung erfolgt demzufolge erst nach dem Produktionsprozess. Ein wesentlicher Nachteil liegt darin, dass die Staubprobe in der Abgasrohrleitung isokinetisch angesaugt werden muss, um die Repräsentativität der Probe zu gewährleisten, was mit technischen Schwierigkeiten verbunden ist.

Der Erfindung liegt nun die Aufgabe zugrunde, ein Verfahren zu entwickeln, mit dem in rascher Folge repräsentative Proben des Materials, das analysiert und sortiert weitergeleitet werden soll, entnommen und in ausreichend kurzer Zeit analysiert werden kann. Mit einem solchen Verfahren soll z.B. beim Erzabbau in der zuvor beschriebenen Weise von jeder Schaufel eine Probe entnommen und so schnell analysiert werden, dass ohne Wartezeit der Schaufelinhalt in den für diese Erzzusammensetzung bzw. für diese Qualität vorgesehenen Schacht geleitet werden kann. Dadurch liesse sich eine wesentlich genauere Sortierung des abgebauten Materials erreichen.

Es hat sich nun gezeigt, dass sich diese Aufgabe in technisch fortschrittlicher Weise lösen lässt, wenn bei einem Verfahren der eingangs genannten Art die Proben in Form eines aufgewirbelten, beim Bewegen während des Abbaus oder der Verarbeitung des Materials anfallenden oder künstlich erzeugten Gemisches aus gröberem Staub und Feinstaub aufgenommen werden, wobei als Feinstaub Partikel mit Korngrössen <200 µm anzusehen sind, danach der gröbere Staub abgetrennt wird und wenn der gesamte Feinstaub oder eine Fraktion dieses Feinstaubes analysiert wird.

Die Staubprobe kann auf Filter oder in einem kleinen Gefäss abgeschieden werden. Die Staubausbeute wird in der Regel zwischen 10 und 100 mg liegen. Als ein für die Filterproben geeignetes Analysenverfahren kommt dabei die Röntgenfluoreszenzanalyse in Frage. Wird die Probensubstanz in einem Behälter abgeschieden, dann kann die Analyse auch über ein angepasstes nasschemisches Verfahren erfolgen. Bei einer Eisenerzprobe (Magnetit, Apatit) z.B. kann der Apatit, der den qualitätsbestimmenden Phosphor enthält, durch heisse Reagenzien aufgelöst und analysiert werden.

Weitere Elemente lassen sich über spezielle physikalische Eigenschaften, z.B. unter Ausnützung des Ferrimagnetismus beim Magnetit, analysieren.

Eine andere geeignete Methode für die Schnellanalyse der Staubprobe ist die Plasmaemissionsspektroskopie. In diesem Fall wird der Staub entweder direkt in das Plasma eingeblasen oder vor dem Einblasen bereits verdampft. Aufgrund der kleinen Korngrösse des Staubes lässt sich das Material augenblicklich verdampfen.

Anhand der innerhalb sehr kurzer Zeit (ca. 1 min) nach Beginn der Probennahme vorliegenden Analysenergebnisse ist es möglich, noch während des Transportes der analysierten Rohstoffmenge eine Entscheidung über den weiteren Verbleib dieser Rohstoffmenge zu treffen. Ausserhalb vorgegebener Qualitätsnormen liegende Mengen können verworfen oder mit entsprechend guten Mengen vermischt werden, um eine gleichbleibende Rohstoffqualität zu erzielen. Gleichzeitig können unerwünschte und später nicht mehr rückgängig zu machende Aufmischungen vermieden werden. Weitere Vorteile der Analyse der Materialien, z.B. der mineralischen Rohstoffe, im Rahmen des erfindungsgemässen Verfahrens unter Verwendung des bei den Bearbeitungsvorgängen entstehenden oder künstlich erzeugten, aufgewirbelten Gemisches aus grobem Staub und Feinstaub liegen in
- der unmittelbaren Eignung der gewonnenen Probe zur chemischen Schnellanalyse ohne Aufmahlen oder sonstige Präparation und
- der verfahrenstechnisch einfach zu erzielenden Repräsentativität der Proben.
- Die Repräsentativität der Probe ist im Falle stark inhomogener Materialzusammensetzung besser als bei Proben, die auf konventionelle Weise gewonnen wurden.

Beides zusammen führt zu einer erheblich schnelleren Analyse der Materialien verglichen mit den bekannten und heute üblichen Verfahren.

Auch ist von Bedeutung, dass sich das erfindungsgemässe Verfahren mit verhältnismässig einfachen und wartungsarmen Apparaturen durchführen lässt.

Nach einer vorteilhaften Ausführungsart des erfindungsgemässen Verfahrens wird das Staubgemisch bei der Probennahme durch Druckluft in der Weise erzeugt, dass während des Ladevorgangs durch mehrmaliges Anblasen der Erzladung Staub aufgewirbelt und abgesaugt wird.

Ferner ist es in weiterer Ausgestaltung der Erfindung möglich, gröbere Anteile aus dem Staubgemisch in einer oder mehreren Stufen durch gravimetrische Methoden und/oder mit Filtern auszuscheiden. Auch können dabei Staub-Anteile bestimmter Zusammensetzung durch magnetische oder elektrostatische Ausscheidung der anschliessenden chemischen Analyse entzogen werden. Es hat sich nämlich gezeigt, dass eine bestimmte Korngrössenfraktion in vielen Fällen für die chemische Zusammensetzung der zu analysierenden Materialien repräsentativer ist als die übrigen Staubanteile, dies liegt z.B. daran, dass bei der Probennahme bzw. beim Aufsaugen der gröberen Staubteilchen in verstärktem Masse willkürliche Selektionsprozesse auftreten, bzw. dass feinkörniger Staub aus der Umgebung gleichzeitig auftritt.

Des weiteren ist es erfindungsgemäss vorgesehen, den Feinstaub auf ein Membranfilter aufzubringen und sodann das Ganze, z.B. nach Einkapseln des Filters in eine hermetisch verschliessbare Kassette, zur chemischen Analyse weiterzuleiten. Der Transport solcher Proben kann mit einer Rohrpostanlage rasch und ohne Kontamination durch Umgebungsstaub erfolgen.

Weitere Merkmale, Vorteile und Anwendungsmöglichkeiten der Erfindung gehen aus den folgenden Schilderungen weiterer Details anhand von Ausführungsbeispielen sowie aus den beigefügten Abbildungen hervor.

Es zeigen in schematischer Vereinfachung

Fig. 1 das Prinzip einer Vorrichtung zur Durchführung des erfindungsgemässen Verfahrens,

Fig. 2 verschiedene Ausführungsmöglichkeiten für die Ausbildung des Vorabscheiders der Vorrichtung nach Fig. 1,

Fig. 3 verschiedene Ausführungsmöglichkeiten für die Ausbildung des Staubabscheiders der Vorrichtung nach Fig. 1,

Fig. 4 einen Schaufellader mit einer Ausführungsart der Vorrichtung nach Fig. 1 und

Fig. 5 im Diagramm den gemittelten Phosphorgehalt nach herkömmlicher Methode im Vergleich zu dem erfindungsgemäss erreichten Ergebnis.

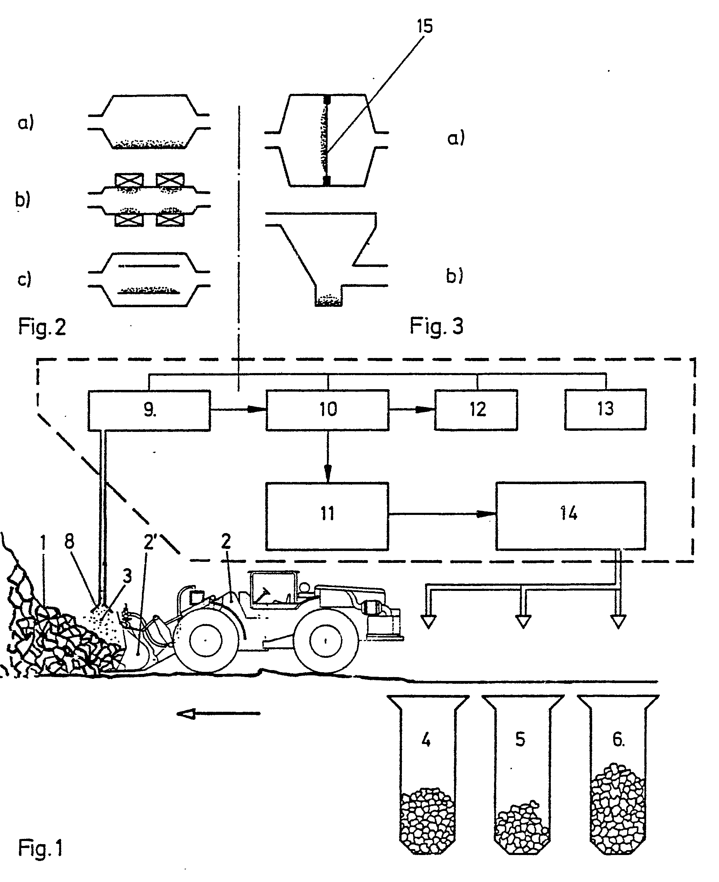

Wie Fig. 1 zeigt, wird in dem hier dargestellten Beispiel Eisenerz 1 im Schaufellader 2 zu den Sammelschächten 4 bis 6 transportiert. Beim Laden des Erzes 1 in die Schaufel 2' wird in dieser Ausführungsart der entstehende Staub 3 mit Hilfe eines Staubsammelkopfes 8 angesaugt. Die Einheit 12 symbolisiert eine Saugpumpe. Steht an der Messstelle nicht genügend Staub zur Verfügung oder ist der natürlich anfallende Staub nicht ausreichend repräsentativ, wird die benötigte Staubmenge durch Anblasen des Erzes 1 mit Pressluft, durch in der Nähe des Staubsammelkopfes 8 angeordnete Staubsammelvorrichtungen oder dgl. erzeugt. Der Staubsammelkopf 8 enthält zweckmässigerweise einen (hier nicht gezeigten) Vorfilter, um bereits an dieser Stelle die maximale Korngrösse der Probe festzulegen.

Je nach Art des zu untersuchenden Materials werden in dem anschliessenden Separator 9 (siehe auch Fig. 2) Staubanteile mit bestimmten Eigenschaften vor der weiteren Untersuchung abgetrennt. Der verbleibende Staub wird dann in dem Luftstrom mit Hilfe eines Staubabscheiders 10 (siehe auch Fig. 3) entnommen. Der Staubträger — ein Staubfilter oder ein Gefäss, je nach Ausbildung des Staubabscheiders 10 — wird sodann einem Schnellanalysengerät 11 zugeführt.

Der Ablauf des gesamten Vorgangs von der Probennahme bis zur Schnellanalyse (Beginn und Ende des Saugvorgangs, Synchronisation mit einem Anblasegerät oder mit einem Mahlwerkzeug zur Erzeugung des Staubes, Betrieb des Separator, Luftdurchsatz sowie Zuführung und Entnahme der Proben) wird hier durch die symbolisch dargestellte Steuerung 13 geregelt und kann in rascher Folge wiederholt werden.

Das Analysenergebnis enthält die Aussage über die weitere Behandlung des in dem Schaufellader 2 befindlichen Minerals 1. In dem skizzierten Ausführungsbeispiel entscheidet das Ergebnis der Schnellanalyse in der Stufe 11 über die weitere Behandlung des in dem Schaufellader 2 befindlichen Minerals. Das Ergebnis der Schnellanalyse wird in der Steuereinheit 14 ausgewertet, mit deren Hilfe das Mineral 1 je nach «Qualitätsstufe» in den Schacht 4, 5 oder 6 weitergeleitet wird.

Fig. 2 dient zur Veranschaulichung der unterschiedlichen Prinzipien, auf den die Staubtrennung im Separator 9 beruhen kann. Im Beispiel a) wird von der gravimetrischen Trennung Gebrauch gemacht, während im Falle b) magnetisch und im Beispiel c) elektrostatisch Anteile abgesondert werden; in der Praxis wird in der Regel eine spezifische Methode oder eine Kombination mehrerer Methoden angewendet.

Als Staubabscheider 10 lässt sich z. B. gemäss Beispiel 1a in Fig. 3 eine Filterabscheideanordnung oder ein Zyklon oder Impaktor (Fig. 3a) einsetzen. Das mit dem zu untersuchenden Staub belegte Filterblatt 15 (Fig. 3a) des Staubabscheiders 10 wird vorzugsweise in einen Behälter eingekapselt und mit diesem Behälter zur Schnellanalyse in die Stufe 11 weitergeleitet.

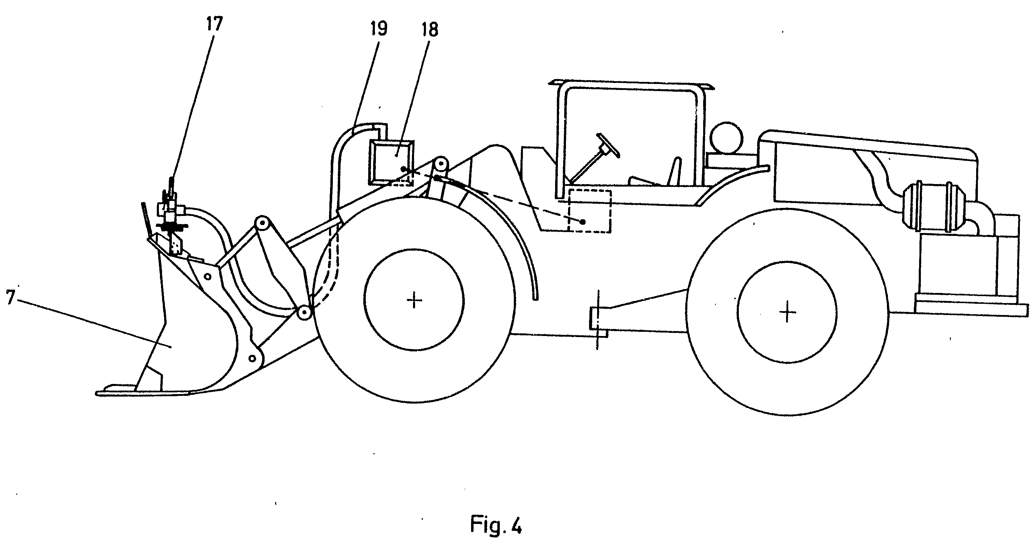

Einen im Erzabbau verwendeten Schaufellader mit einer Vorrichtung zur Durchführung des erfindungsgemässen Verfahrens zeigt Fig. 4. Der Staubsammelkopf 8 gemäss Fig. 1 ist in diesem Beispiel ein Bestandteil des Staubsammelgerätes 17. Separator 9 und Staubabscheider 10 (siehe Fig. 1) sind ebenfalls in diesem Gerät 17 untergebracht. Als Saugpumpe 12 dient eine Turbine 18, die über den Schlauch 19 mit dem Staubsammelgerät 16 verbunden ist. Die Turbine 18 ist für eine Luftdurchsatzleistung von 1 bis 3,5 m³/h bezogen auf die Querschnittsfläche in cm² des in dem Sammelgerät 17 eingelegten Membranfilters – vergleichbar mit dem Filter 15 gemäss Fig. 3a – bzw. bis ca. 300 m³/h ausgelegt. Sollte der beim Verladen anfallende Staub nicht ausreichen, wird durch Aufbau einer Luftströmung über der Schaufel 7 mit Hilfe von Pressluft (die hierzu erforderlichen Einrichtungen sind herkömmlicher Natur und daher nicht gezeichnet) sichergestellt, dass auch von weiter entfernt liegenden Bereichen der Schaufel 7 Staub in das Sammelgerät 17 herangeführt wird. Dieses Sammelgerät 16 enthält ein Vorfilter mit nachfolgender Filtereinheit gemäss Fig. 3a bzw. einen Impaktor gemäss Fig. 3b. Aufgrund der starken Schwankungen in der mittleren Grösse der Erzbrocken des zu ladenden Gutes schwankt auch die verfügbare Staubmenge stark. Durch die Anordnung der Düsen am Schaufelrand 7, mit Hilfe von Pressluft mit in diesem Beispiel 6 atü und auch durch hohe Saugleistung am Sammelgerät ist sichergestellt, dass in jedem Fall ausreichend Staubprobenmaterial gesammelt wird. Eine Saugzeit von ca. 20 sec ist bereits ausreichend, um eine genügende Menge an Staubgemisch (ca. 30 mg) für eine Analyse zu sammeln. Die Staubprobe wird anschliessend an Bord des Schaufelladers mit einem speziell für diesen Fall entwickelten, auf einem nasschemischen Verfahren beruhenden Test innerhalb kurzer Zeit analysiert oder nach Entnahme der Feinstaub-Probe zusammen mit dem Membranfilter in einem stationären Röntgenfluoreszenzanalysengerät innerhalb von 10 bis 50 Sekunden analysiert. Die Analysenzeiten sind bei beiden Analysenmethoden so kurz, dass dem Fahrer des Schaufelladers bereits vor dem Abkippen seiner Ladung mitgeteilt werden kann, welche Qualität sich gerade in der Schaufel befindet und in welchen Schacht bzw. in welche Deponie er seine Ladung abladen soll.

Ein Vergleich des erfindungsgemässen Verfahrens mit der üblichen, gegenwärtig benutzten Probennahme zeigt, dass die Genauigkeit des erfindungsgemässen Verfahrens bei der Phosphoranalyse wesentlich besser ist. Basierend auf einer Versuchsreihe, die während des Erzabbaus durchgeführt wurde, lassen sich folgende Fehlerbreiten (Standard-Abweichung) für die beiden genannten Verfahren angeben:

$\sigma(P) = 0,25 \sqrt{P}$ für die herkömmliche Standard-Methode
und
$\sigma(P) = 0,14 \sqrt{P}$ für das erfindungsgemässe Verfahren.

Hierbei bedeutet P = Phosphorgehalt der Schaufelladung in Gewichtsprozent (1 = 100%).

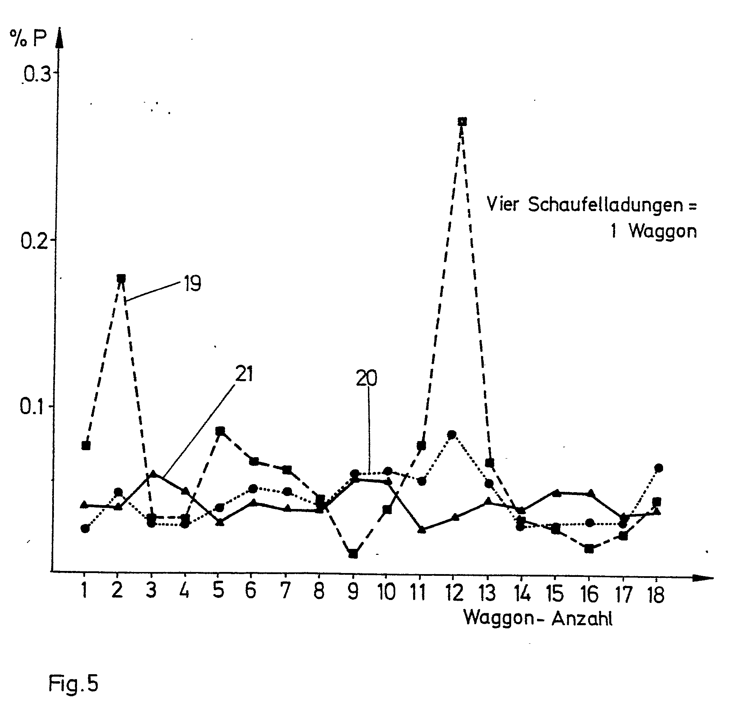

Fig. 5 zeigt die gemittelten Analysenwerte von Schaufelladungen sowohl für die Standard-Methode (19) als auch für das erfindungsgemässe Verfahren (20) verglichen mit den Analysenwerten der entsprechenden Wagenladungen nach Entleeren des Schachtes (21). Bei dieser Versuchsreihe wurde jede Schaufel analysiert. Während des normalen Produktionsablaufs ist es jedoch nur mit Hilfe des erfindungsgemässen Verfahrens möglich, jede Schaufel zu analysieren, da nur max. 60 sec für die Analyse zur Verfügung stehen.

Tabelle 1 zeigt die Bedeutung des erfindungsgemässen Verfahrens für die Ausbeute von niedrig-phosphorhaltigem Erz (0,08% Phosphor) in einem als Beispiel untersuchten Minenabschnitt.

Tabelle 1

| | % niedrig phos-phorhaltiges Erz | Fehler der Analysen-methode | |
|---|---|---|---|
| erfindungsgemässes Verfahren | 56,3 | $0,14\sqrt{p}$ | Analyse jeder |
| bisher angewendetes Verfahren | 50,0 | $0,25\sqrt{p}$ | Schaufel |
| erfindungsgemässes Verfahren | 30 | $0,14\sqrt{p}$ | Analyse nur jeder |
| bisher angewendetes Verfahren | 20 | $0,25\sqrt{p}$ | 6. Schaufel |

Tabelle 1: Ausbeute an niedrig-phosphorhaltigem Erz für verschiedene analytische Methoden und Verfahren. Die Hauptvorteile des erfindungsgemässen Verfahrens, nämlich Schnelligkeit und Genauigkeit, führen deutlich sichtbar zu einer beträchtlichen Steigerung der Produktion von niedrig-phosphorhaltigen Eisenerzen.

Auch ist es möglich, aus den Analysenwerten der Einzelschaufeln die Analysenwerte des Gesamtinhaltes der Einzelschächte bzw. der Deponien auszurechnen.

Das erfindungsgemässe Verfahren lässt sich in prinzipiell gleicher Weise für die Analyse und anschliessende Sortierung anderer grober bis feinteiliger Materialien verwenden. Da von der Probennahme bis zu Analyse nur eine kurze Zeitspanne (ca. 1 min) vergeht, verbleibt bei vielen Transportvorgängen genügend Zeit zur Beförderung des Materials entsprechend seiner Zusammensetzung oder seiner Qualität zur zugeordneten Lagerstelle oder zum zugeordneten Behälter.

**Patentansprüche**

1. Verfahren zum Sortieren von groben bis feinteiligen Materialien nach ihrer chemischen Zusammensetzung, bei dem Proben entnommen und analysiert werden und bei dem das Sortieren der Materialien in Abhängigkeit von dem Analyseergebnis gesteuert wird, dadurch gekennzeichnet, dass die Proben in Form eines aufgewirbelten, beim Bewegen während des Abbaus oder der Verarbeitung des Materials anfallenden oder künstlich erzeugten Gemisches aus gröberem Staub und Feinstaub aufgenommen werden, wobei als Feinstaub Partikel mit Korngrössen <200 µm anzusehen sind, dass der gröbere Staub abgetrennt wird und dass der gesamte Feinstaub oder eine Fraktion dieses Feinstaubes analysiert wird.

2. Verfahren nach Anspruch 1, dadurch gekennzeichnet, dass bei der Probennahme das Gemisch aus gröberem Staub und Feinstaub durch Druckluft oder durch mechanische Zerkleinerung erzeugt wird.

3. Verfahren nach Anspruch 1 oder 2, dadurch gekennzeichnet, dass der gröbere Staub aus dem Gemisch in einer oder mehreren Stufen durch gravimetrische Methoden und/oder mit Filter ausgeschieden wird.

4. Verfahren nach einem der Ansprüche 1 bis 3, dadurch gekennzeichnet, dass Staub-Anteile bestimmter Zusammensetzung durch magnetische oder elektrostatische Abtrennung ausgeschieden werden.

5. Verfahren nach einem der Ansprüche 1 bis 4, dadurch gekennzeichnet, dass der Feinstaub auf einen Membranfilter aufgebracht und zusammen mit diesem Filter zur Analyse weitergeleitet wird.

6. Verfahren nach einem der Ansprüche 1 bis 5, dadurch gekennzeichnet, dass zur Probennahme das Gemisch aus gröberem Staub und Feinstaub aufgesaugt wird.

**Claims**

1. Process for sorting coarse to fine materials according to their chemical composition, in which samples are taken and analyzed, and in which the sorting of the materials is controlled according to the results of the analysis, characterized in that the samples are taken in the form of an air swirled mixture of coarse dust and fine dust which is obtained as a by-product by the movement of the material during the mining or processing or is produced artificially, and that the coarse dust is separated and all of the fine dust being composed of particles having a grain size of less than 200 µm.

2. Process as claimed in claim 1 wherein in the sampling process the mixture of coarse dust and fine dust is produced by compressed air or mechanical crushing.

3. Process as claimed in claims 1 or 2 wherein the coarse dust is removed from the mixture in one or more stages using gravimetric methods and/or by filtering.

4. Process as claimed in any of the claims 1 to 3 wherein dust particles of a specific composition are removed by magnetic or electrostatic separation.

5. Process as claimed in any of the claims 1 to 4 wherein the fine dust is collected on a membrane filter and is passed on together with this filter for analysis.

6. Process as claimed in any of the claims 1 to 5 wherein, for sampling, the mixture of coarse dust and fine dust is taken up by suction.

**Revendications**

1. Procédé de triage préalable de matériaux, des parties grossières aux parties fines selon leur composition chimique, des échantillons étant prélevés et analysés, et le tri des matériaux étant commandé en fonction des résultats d'analyse, procédé caractérisé en ce que les échantillons sont prélevés sous la forme d'un mélange de poudres grossières et fines, soulevé en tourbillons, obtenu par agitation durant la décomposition ou le traitement du matériau, ou obtenu artificiellement, les particules d'une grosseur de grains $< 200\,\mu$ étant considérées comme poudre fine, la poudre à gros grains étant séparée, et toute la poudre fine ou une fraction de celle-ci étant analysée.

2. Procédé selon la revendication 1, caractérisé en ce que lors de la prise d'échantillon, le mélange de poudre fine et grossière est obtenu par action d'air comprimé ou par broyage mécanique.

3. Procédé selon l'une des revendications 1 ou 2, caractérisé en ce que la poudre grossière est séparée du mélange en une ou plusieurs étapes par procédé gravimétrique et/ou à l'aide de filtres.

4. Procédé selon l'une quelconque des revendications 1 à 3, caractérisé en ce que des parties de poudre d'une composition déterminée sont séparées par procédé magnétique ou électrostatique.

5. Procédé selon l'une quelconque des revendications 1 à 4, caractérisé en ce que la poudre fine est conduite sur un filtre à membrane et ensuite, elle est amenée à l'analyse en commun avec ce filtre.

6. Procédé selon l'une quelconque des revendications 1 à 5, caractérisé en ce que pour le prélèvement d'échantillon, le mélange de poudres fine et grossière est aspiré.

Fig. 2

Fig. 3

Fig. 1

Fig. 4

Fig.5